# EUROPEAN PATENT APPLICATION

(11) **EP 1 182 830 A2**
(43) Date of publication of application: **27.02.2002**
(21) Application number: 01118455.3
(22) Date of filing: 31.07.2001
(51) Int. Cl.: H04L 12/56, H04B 7/26, H04H 1/00, H04N 7/24

(54) **Method and system of data transmission using a multi-channel radiocommunication system, and image data transmitting system using the said method and system**

(30) Priority: 01.08.2000 KR 2000044675
(71) Applicant: Komonet Co., Ltd., Seoul (KR)
(72) Inventor: Cha, Hyun Jong, Songpa-ku, Seoul (KR)
(74) Representative: Ebbinghaus, Dieter, Dipl.-Ing.

(57) **Abstract**

A radio multi-channel data communicating system and method thereof and an image data transmitting system using the same which can be used as a real time image transmission system, are provided, in which an existing communication network is configured into a radio multi-channel communication network, data is divided and transmitted and then received and decoded, to thereby transmit and receive a large amount of data quickly.

## Description

### BACKGROUND OF THE INVENTION

### Field of the Invention

The present invention relates to a radio multi-channel data communicating system and method thereof and an image data transmitting system using the same, and more particularly, to a radio multi-channel data communicating system and method thereof and an image data transmitting system using the same which can be used as a real time image transmission system, in which an existing radio communication network is configured into a multi-channel communication network, data is divided and transmitted and then received and decoded, to thereby transmit and receive a large amount of data quickly.

### Description of the Related Art

In general, there are a PSTN (Public Switched Telephone Network), a communication network using a cable TV transmission network, and communication lines such as an ISDN, xDSL, etc., as communication networks which enable general users to access the Internet. There is also a data communication method using a mobile communication device such as a mobile phone during moving.

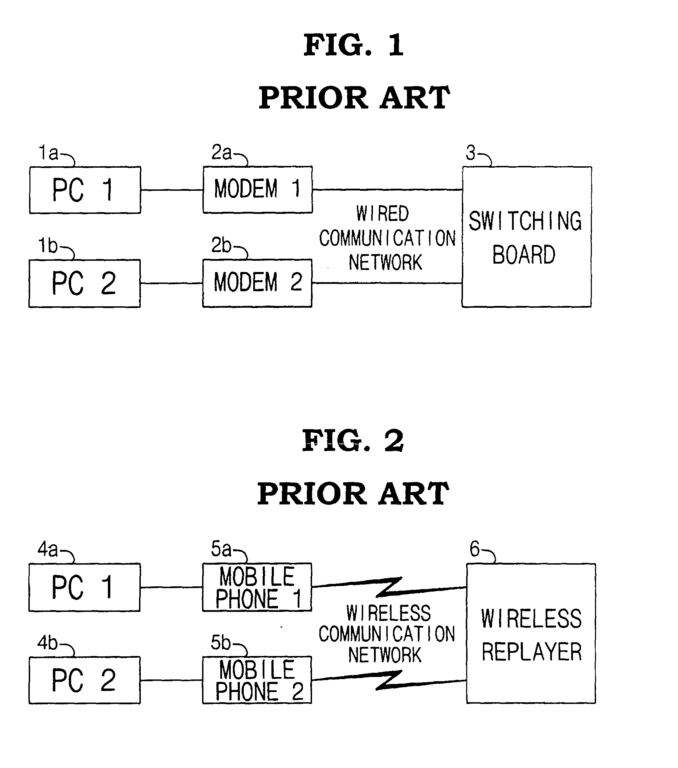

A principle of data communication using a wired communication network is shown in FIG. 1. As shown in FIG. 1, data communications are accomplished by enabling a personal computer (PC) 1a to another PC 1b or a data server (not shown), via a modem 2a connected to the PC 1a, a switching board 3 connected with the modem 2a via a wired communication network, and a modem 2b connected with the switching board 3 via a wired communication network, in turn.

In this case, a maximum data transmission speed is 500kbps or so. Actually, in the case of an xDSL communication line, a 300kbps or so data transmission speed is provided, and in the case of a PSTN network, a maximum 56kbps data communication speed is provided.

Also, in the case that a dedicated communication line is installed, there are provided various data transmission speeds such as 56/64kbps, 128kbps, 256kbps, 512kbps, 1, 024kbps, 2,048kbps and 45Mbps, according to classes of the dedicated communication lines. Since these dedicated communication lines are very expensive, individuals feel burdens to use these dedicated communication lines.

Thus, individuals use PSTN, xDSL or cable TV communication networks in order to perform data communication.

A principle of performing data communication during movement using a wireless communication network is shown in FIG. 2. As shown in FIG. 2, data communications are accomplished by enabling a mobile phone 5a or a notebook computer (PC) 4a connected to the mobile phone 5a to another mobile phone 5b or another notebook computer PC 4b connected to the mobile phone 5b, via a wireless repeater 6, in which case a currently provided data transmission speed is 64kbps or so at maximum.

Thus, the above data transmission speed of 64kbps does not cause any problems in transmitting or receiving a small amount of data of which file size is small as in a document file, but is very slow in the case that a multimedia file or a large file having a large amount of data is transmitted or received.

For example, when data is transmitted at a speed of 10kbps, it takes about 13.3 minutes in transmitting a data file of a 1MB size.

The data transmission speed of 10kbps is too slow to transmit motion images within a quick time.

Since a sheet of compact disc (CD) of 600MB contains image data of sixty minutes in an image quality of a video CD (VCD), it takes about six hundred sixty five minutes to transmit data of 50MB size in order to transmit VCD images of five minutes or so at a transmission speed of 10kbps.

If a data transmission speed to be provided in a single channel becomes sufficiently faster, desired data can be transmitted within a short time. However, it takes time to develop a technology of transmitting data at a fast data transmission speed.

In other words, it is not possible for most of individuals to use an ultra-high data transmission speed. In particular, it is not possible at present for most of individuals to use high-speed data communication with an inexpensive individual communication device in wireless data communication.

In the case that an existing public communication network or wireless communication network is used for data communication, data having a large amount of data and to be transmitted and received within a short time is confronted with a limitation by which a high-speed dedicated communication line should be used.

Thus, the existing wired or wireless public communication network cannot be used in order to transmit and receive a large amount of data within a short time due to the limitation of the data transmission speed of the public communication network.

### SUMMARY OF THE INVENTION

To solve the above problems, it is an object of the present invention to provide a radio multi-channel data communicating system and method thereof and an image data transmitting system using the same, in which a public communication network having a plurality of channels is configured into a multi-channel communication network so that a large amount of data can be transmitted and received within a short time using a wireless public communication network, and data is divided and transmitted and the divided data is received, synthesized and decoded, to thereby overcome a limitation of a data transmission speed of a public communication network,

To accomplish the above object of the present invention, there is provided a radio multi-channel data communicating system comprising: a file divider for dividing a file size of data to be transmitted into a number of available channels; a plurality of first data converters for converting respective data in order to transmit the file divided by the file divider via a plurality of communication channels; a plurality of data transmitters for transmitting data respectively converted by the plurality of the first data converters via a communication network; a plurality of data receivers for receiving data transmitted from the plurality of the data transmitters via the communication network; a plurality of second data converters for converting data respectively received by the plurality of the data receivers; and a file synthesizer for synthesizing the divided files respectively converted by the plurality of the second data converters.

There is also provided a radio multi-channel data communicating method for transmitting and receiving data using a radio multi-channel, the radio multi-channel data. communicating method comprising the steps of: (a) dividing a file size of data to be transmitted into a number of available channels; (b) converting a number of the divided files of step (a) into a data format for transmitting the converted result via respective mobile phone terminals; (c) receiving data transmitted from step (b) via the respective mobile phone terminals and converting the received data into an original data file format; and (d) synthesizing the divided files respectively converted in step (c) into an original single file.

The divided file comprises a file structure portion representing an attribute of the file and a file data portion including data. The file structure portion comprises a file name and a file size of an original file, and contents of a sequence of the divided file.

There is also provided an image data transmitting system using a radio multi-channel data communicating system in which a file to be reproduced in real time is transmitted and reproduced using the radio multi-channel data communicating system, the image data transmitting system comprising: a radio multi-channel data communicating system for dividing a data file desired to be transmitted into a number of files, transmitting the divided files, receiving the transmitted files and synthesizing the received files into an original file; a vehicle state detector for detecting a running state of the moving vehicle and outputting the detected result; a data processor for receiving a data file received via the radio multi-channel data communicating system and the result output from the vehicle state detector, and converting the received data file and detected result into an image signal and outputting the converted image signal; and a plurality of displays for displaying data output from the data processor thereon.

As described above, in the present invention, an existing unit communication network of which the data transmission speed is relatively slow is constructed into a radio multi-channel, to thereby divide a transmission file and transmit the divided file via each channel. As a result, the present invention can be used in a moving picture services field requiring a real time data transmission speed.

### BRIEF DESCRIPTION OF THE DRAWINGS

The above object and other advantages of the present invention will become more apparent by describing the preferred embodiments thereof in more detail with reference to the accompanying drawings in which:
FIGs. 1 and 2 are block diagrams for explaining existing wired and wireless data transmitting systems, respectively;
FIG. 3 is a block diagram for explaining configuration of a radio multi-channel data communicating system according to the present invention;
FIG. 4 is a view for explaining structure of a general file;
FIG. 5 is a view for explaining formats of time and date data of a file;
FIG. 6 is a view for explaining relationship between a FAT and a file;
FIG. 7 is a view for explaining a method of recording size of a file;
FIG. 8 is a view for explaining structure of a file in order to divide a file according to the present invention;
FIG. 9 is a view for explaining structure of a file which has been divided according to the present invention;

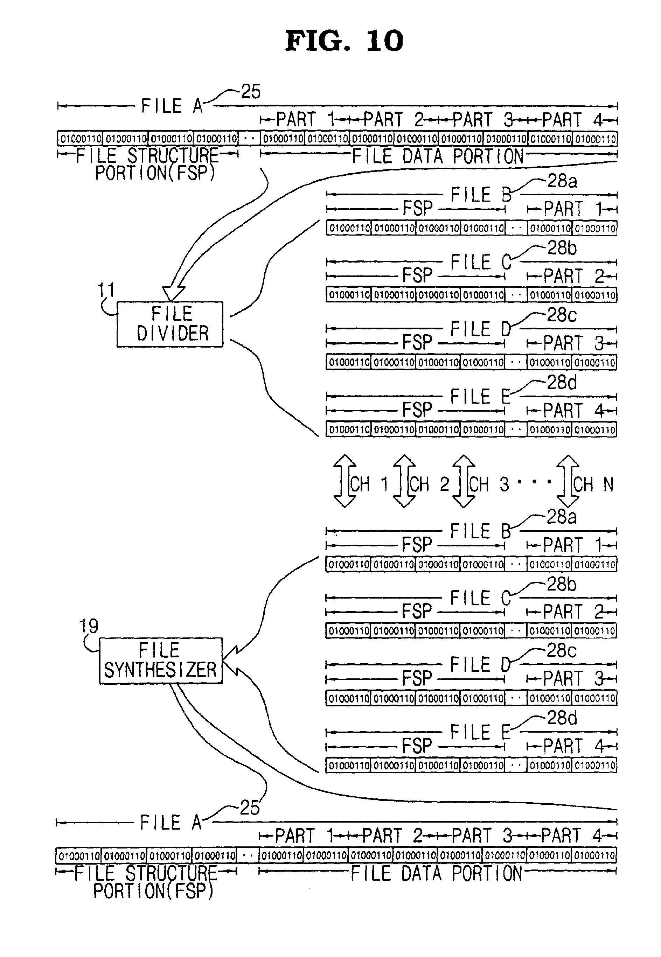

FIG. 10 is a view for explaining a process of dividing a file and transmitting the divided file, and receiving the transmitted file and synthesizing the received file, according to the present invention;
FIG. 11 is a view for explaining a process of receiving each divided file in duplication and synthesizing the received file, when a file is divided and then transmitted according to the present invention;
FIG. 12 is a block diagram for explaining configuration of an image data transmitting system using a radio multi-channel data communicating system according to the present invention; and
FIG. 13 is a flowchart view for explaining operation of an image data transmitting system using a radio multi-channel data communicating system according to the present invention.

### DETAILED DESCRIPTION OF THE INVENTION

Preferred embodiments of the present invention will be described with reference to the accompanying drawings.

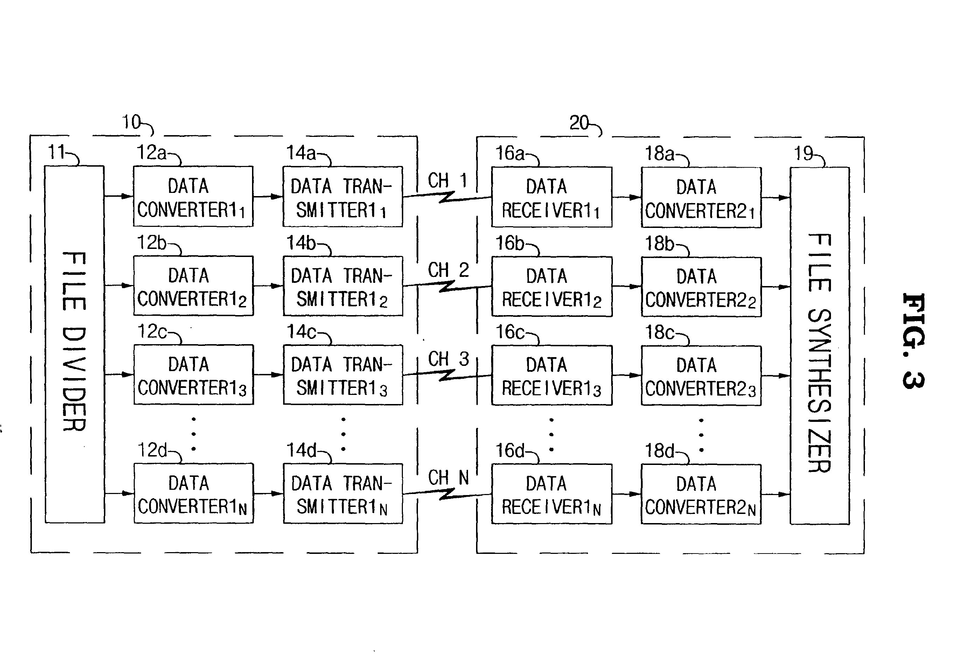

As shown in FIG. 3, a radio multi-channel data communicating system according to the present invention includes a transmitter 10 for dividing a file and transmitting the divided file via a multiplexed communication channel, and a receiver 20 for receiving the divided file transmitted from the transmitter 10 and synthesizing the received file.

The transmitter 10 includes a file converter 11 for converting a file size of data to be transmitted into a number of available channels, a plurality of data converters (1₁-1_{N}) 12a-12d for converting respective data in order to transmit the file divided by the file divider 11 via a plurality of communication channels CH 1-CH N, and a plurality of data transmitters 14a-14d for transmitting data respectively converted by the plurality of the data converters (1₁-1_{N}) 12a-12d via a communication network.

The receiver 20 includes a plurality of data receivers 16a-16d for receiving data transmitted from the plurality of the data transmitters 14a-14d via the communication network, a plurality of data converters (2₁-2_{N}) 18a-18d for converting data respectively received by the plurality of the data receivers 16a-16d, and a file synthesizer 19 for synthesizing the divided files respectively converted by the plurality of the data converters (2₁-2_{N}) 18a-18d.

Here, among the components as shown in FIG. 3, the file divider 11 and the file synthesizer 19 are functions which can be realized by software on a computer transmitting and receiving data files.

The data converters (1₁-1_{N}) 12a-12d in the transmitter 10 and the data converters (2₁-2_{N}) 18a-18d in the receiver 20 are realized by respective modems. The data transmitters 14a-14d and the data receivers 16a-16d are realized by respective mobile phone terminals.

Thus, a file to be transmitted is divided into a number of available communication channels by the file divider 11 in the transmitter 10. The files divided in the file divider 11 are transmitted to a receiving end via the data converters (1₁-1_{N}) 12a-12d and the data transmitters 14a-14d made of the mobile phone terminals connected to the data converters (1₁-1_{N}) 12a-12d, respectively.

Meanwhile, in the receiving end, the divided files are received via the data receivers 16a-16d made of the mobile phone terminals and the data converters (2₁-2_{N}) 18a-18d, respectively, and synthesized by the file synthesizer 19 and restored into an original file of the state which is prior to dividing the file by the file divider 11 in the transmitter 10.

The file division and the file synthesis will be described below with reference to a file structure.

A general data file is made of a predetermined format. Irrespective of which structure is adopted in a file including data, the file includes target data therein. For example, a file includes a DOS file structure, a Windows file structure, or a WindowsNT file structure.

Here, an example of a DOS format file structure will be described.

A predetermined format is needed in order to configure file data. For example, file data is configured by a predetermined format as if a name of a person includes a last name and a first name, or an address includes a country name, a city name, a town name, and a street or avenue name.

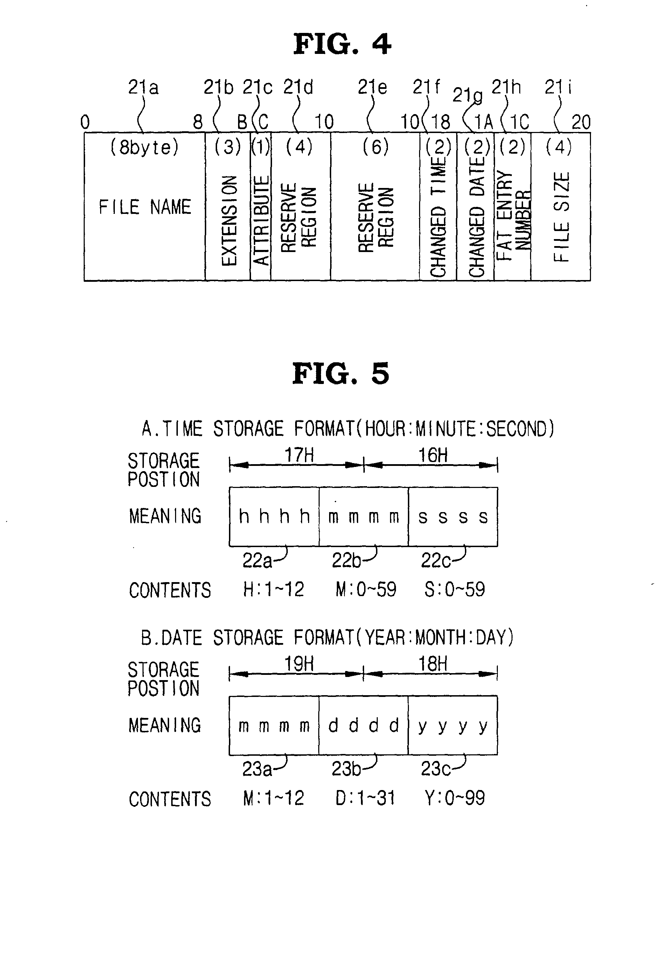

A file structure is configured as shown in FIG. 4.

### (A) File name (21a and 21b)

A file name 21a and an extension 21b include only allowable symbols in a DOS (Disk Operating System) . That is, special symbols cannot be used. A blank code 20H or ASCII 32 is inserted in the case that the number of alphanumerical symbols is smaller than allowable bytes.

In the case that a first byte in the file name 21a is E5H, the first byte means a file deleted by a DEL command. Also, in the case that the first byte in the file name 21a is 00H, the first byte means an unused entry, and there is no directory entry in the following bytes.

The byte following the first byte in the unused directory entry is filled with E5H. That is, E5H entered into the first byte in the file name represents a deleted file and 00H represents an unused region.

An extension 21b is an extended file name following an identifier "." as represented as a filename.extension "filename.exe."

### (B) File attribute (21c, 21d and 21e)

A value representing a file attribute 21c or a lower directory is stored in the eleventh byte in a directory entry. Then, a reserve region 21d of four bytes and a reserve region 21e of six bytes represent a file attribute additionally together with the file attribute 21c.

This value has a meaning in units of a bit, which is set when the value is 1, respectively.

Bit 0 designates a read only attribute.

Bit 1 designates a secret attribute. However, this bit is set so that it is not represented in a general situation.

Bit 2 defines a system file attribute, which is an attribute of a system file use. This system file is also set to bit 0 and bit 1. A file defined by this attribute cannot be accessed with a general system call.

Bit 3 means a volume name. A directory entry of an attribute set to bit 3 is not information relating to a file, but a volume name designated at the time of formatting a disc. The volume name is contained in a file name portion including an extension.

Bit 4 represents a lower directory name. A directory entry having an attribute of bit 4 contains lower directory information not file-related information.

Bit 5 is a general disc file. This bit 5 attribute is set all in the case that a volume name and information relating to a disc file other than a lower directory.

### (C) Changed time/date (21f and 21g)

Times 21f, 16H and 17H and dates 21g, 18H and 19H on which a file is modified and is newly made, are stored in bytes of 16H-19H in the directory entry. Here, it is noted that both the time and the date are processed in units of a word in the form of upper bytes plus lower bytes. a meaning is assigned in an inner bit sequence, of which one example is shown in FIG. 5.

### (D) FAT entry number (21h)

An entry number 21h in a FAT (File Allocation Table) is designated in a byte of 1AH in the directory entry. In other words, provisoes relating information representing whether a file is contained in which location of a storage medium such as a disc, form a very FAT entry number.

The FAT means a table storing positional information representing whether a FAT file or a lower directory is stored in which location of a disc. That is, the FAT entry number has information representing whether one file is located in which portion of a disc storage medium.

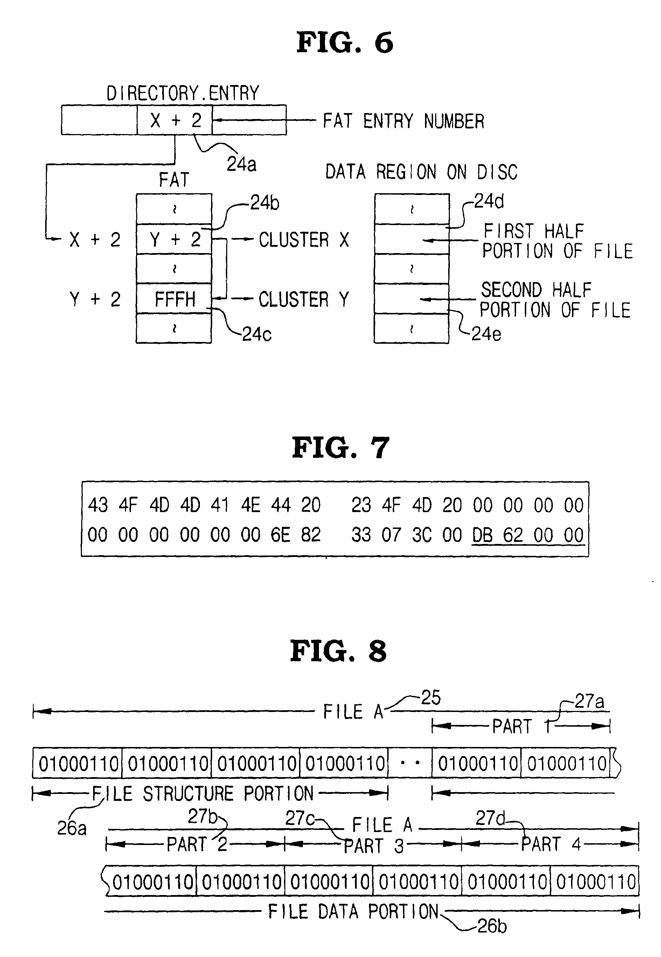

For example, as shown in FIG. 6, when it is assumed that a certain file uses two clusters denoted as X and Y, it is assumed that the file is stored in the sequence of cluster X and cluster Y.

That is, a beginning portion of a file is stored in a cluster denoted as X, from which a FAT entry number 24a corresponding to X is stored in a FAT entry number 24a of a directory, i.e., 1AH of the directory.

Then, an entry number Y+2 corresponding to the following cluster Y is stored in an entry X+2 of the FAT.

Thus, a code FFFH 24c representing a meaning that a file is terminated in this cluster is stored in an entry Y+2 24b designated according to the entry X+2.

When a file is newly made and recorded, an entry number containing a code of 000 is found from the FAT firstly. The found entry number is stored in the FAT entry number of the directory.

Then, data is written in clusters 24d-24e corresponding to the entry number. When data is entered into the clusters, a task of storing the entry termination code FFFH is terminated.

In the case that data still remains, more and blank entries are searched in the FAT, and the searched entry number is stored in a leading entry.

### (E) File size (21i)

Last four bytes from 1CH in the directory entry contain number values representing a file size in units of a byte.

Since the storage pattern takes a double word pattern, the last four bytes are enumerated toward the 29th byte of 1CH in sequence from the final 32nd byte.

Meanwhile, in the case of a directory entry storing the volume name or lower directory, this portion is filled with 00H.

As an example, if a file size is written in a file structure as shown in FIG. 7, byte contents starting from the 29th byte of 1CH are DB, 62, 00, and 00 as in the underlined portions of FIG. 7. If these values are enumerated reversely, the bytes are arranged in the sequence of 00, 00, 62, and DB. That is, the file size is 62DB, i.e., 25307 bytes.

### (F) Expression of file construction

As shown in FIG. 8, a file (FILE A) 25 is usually divided into a file structure portion 26a and a file data portion 26b. In the present invention, the file data portion 26b is divided into N files, for example, four files 27a-27d such as part 1-part 4.

An original file (FILE A) 25 is divided into a number of communication channels by software in a file divider 11, that is, in a computer.

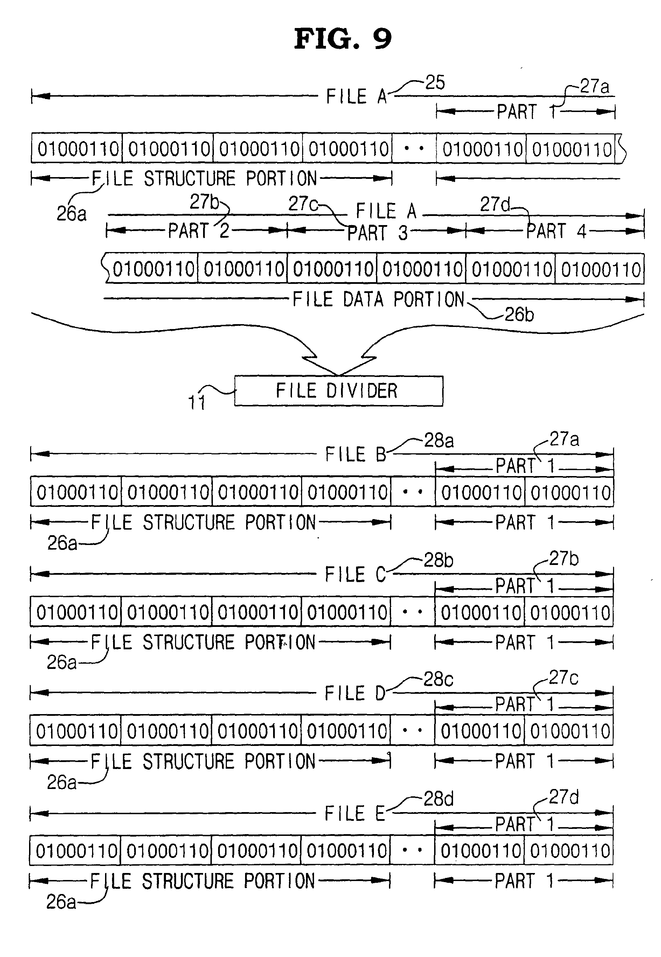

That is, as shown in FIG. 9, the original file (FILE A) 25 is divided into files (FILE B, FILE C, FILE D and FILE E) 28a-28d by the file divider 11. Each of the divided files (FILE B, FILE C, FILE D and FILE E) 28a-28d includes a file structure portion 26a and file data portions 27a-27d.

The file structure portion 26a should include a file name and size, and contents with respect to the sequence of the divided file of the original file, that is, the FILE A 25, necessarily.

A number of the files (FILE B, FILE C, FILE D and FILE E) 28a-28d divided as described above are converted into a data format of a mobile phone terminal by each of the data converters (1₁-1_{N}) 12a-12d, and the converted result is transmitted by the data transmitters 14a-14d made of the mobile phone terminals.

The data converters 14a-14d made of the mobile phone terminals form a radio multi-channel data communicating network CH1-CH4 together with the data receivers 16a-16d made of the mobile phone terminals in the receiver 20.

Meanwhile, in order to divide one file (FILE A) 25 into a number of divided small pieces of files (FILE B, FILE C, FILE D and FILE E) 28a-28d, and transmit the divided data, channels are needed by the number of files, at minimum.

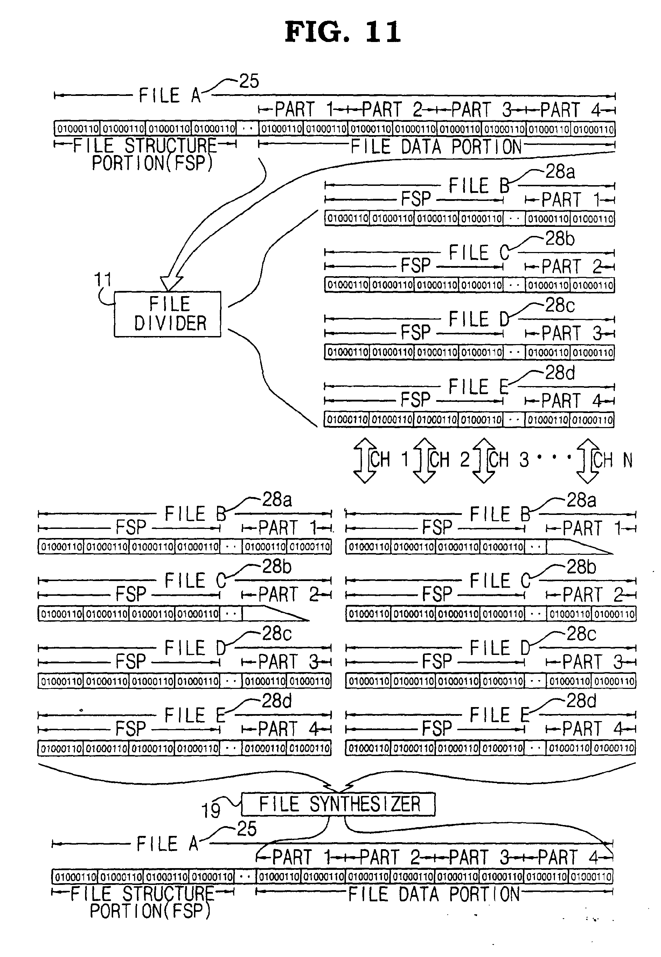

However, considering a communication inferiority state occurring in a mobile communication system, more channels can be secured and used. For example, as shown in FIG. 11, when a file is divided into four files and the four files are transmitted, the respective files are transmitted via a respectively different communication channel using eight communication channels.

By doing so, the four divided files are received into eight files after data transmission and then stored. The additional four files play auxiliary roles of the existing four files. That is, even when a communication inferiority occurs in a certain channel, there is no problem because reserve channels operate.

In the case of the file (FILE B) 28a and 28a' in FIG. 11, the file 28a has been normally received and the file 28a' has not been normally received in which the file data portion has been destructed. Thus, although the file 28a' cannot be reproduced but the file 28a can be reproduced. As a result, there is no problem of reproducing the file (FILE B).

Likewise, the other files (FILE C, FILE D and FILE E) 28b-28d and 28b'-28d' can be reproduced if at least one-side files are normally received. Accordingly, in the case that important files are transmitted, the number of channels may increase to avoid any transmission inferiority.

The radio multi-channel data communicating system according to the present invention configured by the above-described principle transmits and reproduces multimedia data in real time, to thereby construct an image data transmitting system which provides information in real time.

The image data transmitting system according to the present invention can provide real time information to a vehicle of a subway which cannot receive aerial wave broadcastings nor listen to the broadcastings due to the reasons why the subway vehicles run underground.

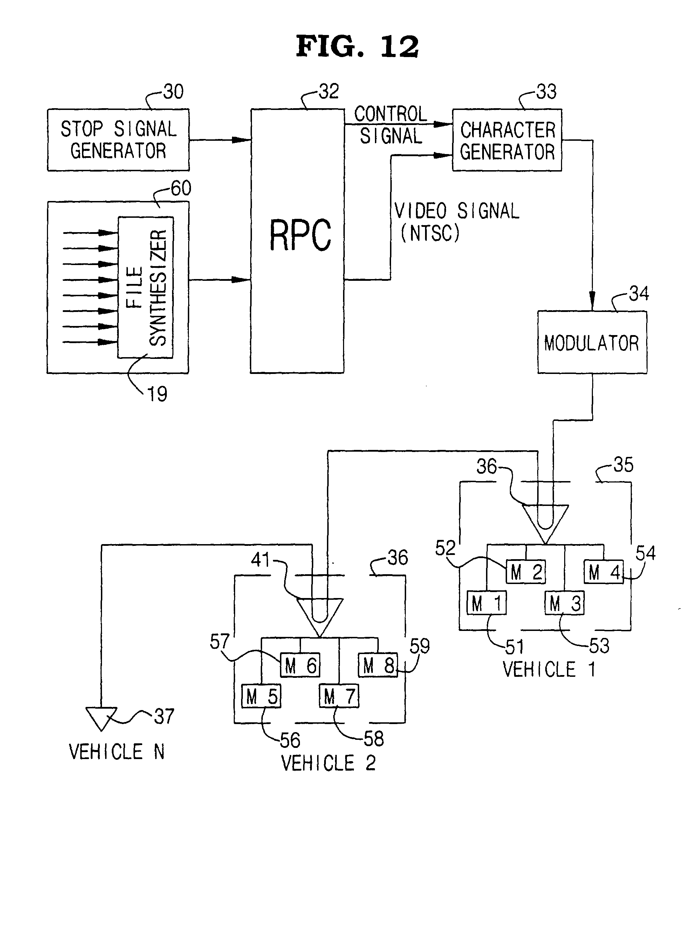

As shown in FIG. 12, the image data transmitting system includes a stop signal generator 30 for taking an interaction between a railway of a subway and a post installed at a station and generating a control signal with respect to a proceeding state or a stop signal of a passing vehicle, a remote program controller (RPC) 32 for receiving video and audio data via a radio multi-channel data communicating system 60 and the received video and audio data together with data with respect to a stop station input via the stop signal generator 30, a character generator 33 for receiving the control signal and the video signal from the RPC 32, producing a character message with respect to the stop station, synthesizing the character message into the video signal, and outputting the synthesized result, a modulator 34 for modulating the video signal output from the character generator 33 into a RF frequency for use in a monitor, and video signal distributors 40 and 41 installed in each of trains 35-37 for receiving the RF frequency output from the modulator 34 and distributing the received RF frequency to a plurality of monitors (M1-M4; M5-M88) 51-54 and 56-59 installed in the trains 35-37, respectively.

The video data received by the image data transmitting system 60 using the radio multi-channel data communicating system according to the present invention having the above-described configuration, that is, a data communication system using a multiplexed communication channel, is written in a storage medium RAM in the RPC 32, and the video data is converted into a video data file by a program in the RPC 32.

The produced video data file has the same structure as the original reproducible video data file, that is, a transmission file of the very state that was divided by the file divider 11.

A time consumed in the above process is taken shorter as a transmission speed of a communication network and a transmission channel number are high, and as speeds of dividing and combining a file and storing the file in a storage medium becomes faster. Accordingly, the consumed time has a considerably deep relationship with a hardware performance in a system.

The present invention does not provide data on a perfect real time basis. However, when a news is broadcasted, the news which can be watched by the present invention system has been already delayed a little but can be accepted in view of a real time state under a limited condition such as a subway.

Further, the delay time can be close to a real time processing when the number of channels increases considerably. Thus, such a delay time need to be determined considering an economic side and a viewer's sentiment with respect to a real time.

Meanwhile, an original file is written on a general storage medium, that is, a magneto-optic storage medium such as a hard disc drive (HDD), a CD, and a magnetic tape cassette in a series of processes of dividing the file into pieces, transmitting and synthesizing the divided files. However, since processes of receiving and synthesizing the divided files via the radio multi-channel data communicating system 60 by the RPC 32 are performed on a RAM in the RPC 32, the divided files are output and reproduced just before the divided files are written on the storage medium such as a HDD. Therefore, the present invention can approach a real time processing more closely.

In other words, the received and combined files are played on a RAM in the RPC 32 before the files are written in a recording medium, that is, a magneto-optic storage medium such as a HDD, a CD, and a tape of which the operating speed is much slower than that of the RAM, and then written on the recording medium after a predetermined time. Therefore, the present invention can approach a real time processing more closely than that of a method of storing the files in a recording medium and then reproducing the stored files.

The files restored into an original file by the radio multi-channel data communicating system 60 are output by the RPC 32 in the form of a video signal which can be viewed. As being the case, a guiding message with respect to a stop station or a screen display with respect to a news prompt is inserted into the file using an overlay board of the character generator 33 and then the inserted result is output.

Otherwise, only characters of the character generator 33 can be displayed and a video signal can be interrupted, by using a matrix switch.

Here, video signal output formats of the RPC 32 and the character generator 33 may be designed by appropriate methods depending upon the situation where the NTSC or PAL method is employed.

The modulator 34 loads or modulates the video signal output from the character generator 33 onto a different frequency band called a carrier and outputs the modulated result.

Here, although the embodiment of the present invention has been described with an example that a video signal is modulated and then the modulated result is output, even a signal which is not modulated by the modulator 34 can be used in the present invention.

Meanwhile, in the case that a video signal is modulated using the modulator 34, a demodulator for demodulating the video signal should be installed in the monitors (M1-M4; M5-M8) 51-54 and 56-59, respectively.

Thus, if a video signal is not modulated and output, no demodulators are needed in the monitors (M1-M4; M5-M8) 51-54 and 56-59, respectively.

The video signal output from the modulator 34 is distributed by video signal distributors 40 and 41 installed in the trains 35-37, respectively and the distributed video signals are supplied to the monitors (M1-M4; M5-M8) 51-54 and 56-59, respectively to be displayed thereon.

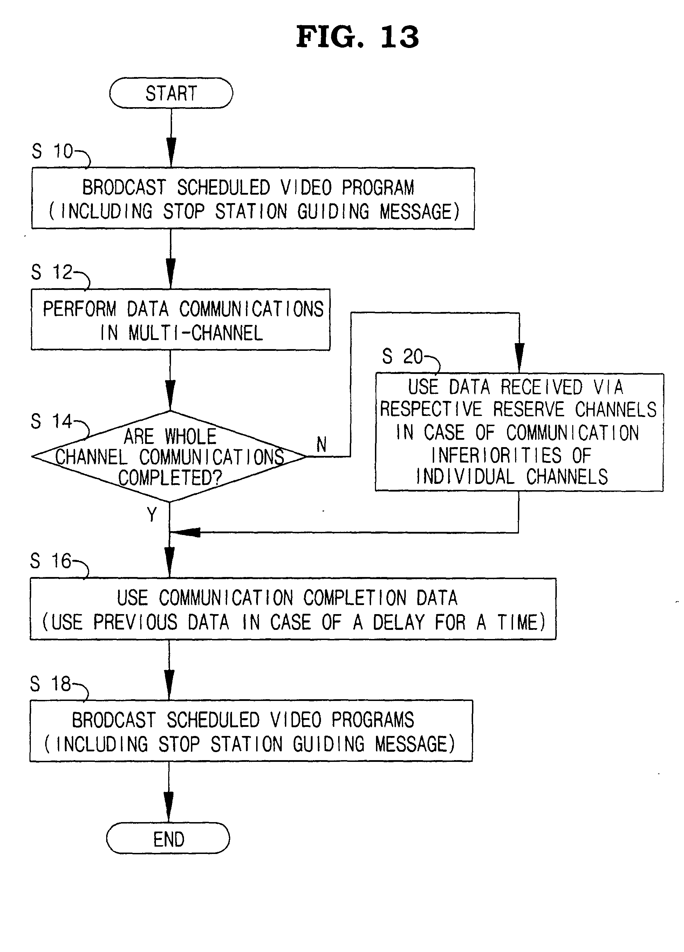

If the above-described processes will be described with reference to FIG. 13 again, the RPC 32 outputs video data stored in the storage medium (HDD) as a video signal according to a running schedule of a subway vehicle based on video data which has been received in advance (S10). Here, the RPC 32 outputs a stop station guiding message included in the video signal with reference to a vehicle running state output from the stop signal generator 30.

Then, video data is received using the radio multi-channel data communicating system 60.

Then, it is confirmed whether data reception is completed via the whole channels while receiving the video data by using the radio multi-channel data communicating system 60 as described above (S14). If data reception has been completed in step S14, the received data is immediately output as a video signal (S16). Here, if data reception is delayed for a predetermined time, the data which has been received previously is output as a video signal.

Meanwhile, if data of part of channels is not received among the whole channels at the step of confirming data reception via the whole channels, data received via the reserve channel of a corresponding channel is used (S20).

As described above, the data received via the whole channel or reserve channel is output as a video signal immediately, or the existing data is output as a video signal at the time of the delayed reception.

A stop station guiding message is included in the thus-received data according to a vehicle running schedule and then the message included data is output as a video signal (S18).

Assuming that a transmission speed of each channel is 56kbps when the number of multiplexed communication channels in the present invention is sixteen, an actual transmission speed can be realized as a transmission speed of 896kbps (=56kbps×16CH) or so. Accordingly, multimedia data including video and audio data having a higher level than that of a VCD can be transmitted in real time and utilized.

The present invention can realize an image broadcasting system in a subway vehicle by using a mobile phone system which is a personal wireless communication device even at a place where a general aerial broadcasting is not received such as a subway. Accordingly, if immediate news prompt information or instantly varying news are added and broadcast, quality of a subway broadcasting service will be remarkably high.

The above-described embodiment has been described with respect to a subway image transmission system employing a data transmission system using a data communication system using a multiplexed communication channel according to the present invention. However, the present invention can be properly used as a real time data transmission system employing a data communication system using a radio multi-channel data communicating system according to the present invention in which a multiplexed communication channel is realized into a multi-channel using an existing single channel communication network, in particular, using mobile phone terminals, at the places where a high-speed data transmission network has not yet been constructed.

In particular, when a high-speed transmission network is used on a time-limited basis, the present invention is more economically efficient and installed and operated on a simpler way than those of the case that a high-speed wired data transmission network is newly constructed.

As described above, in the present invention, an existing unit communication network of which the data transmission speed is relatively slow is constructed into a multi-channel, to thereby divide a transmission file and transmit the divided file via each channel, and then receive and synthesize the transmitted file and reproduce the synthesized result. As a result, the present invention can be used in a moving picture services field requiring a real time data transmission speed.

Also, the present invention can be applied to the circumstances under which it is difficult to receive an aerial wave as in a subway, to thereby enhance quality of services in a subway.

As described above, the present invention has been described with respect to the particularly preferred embodiments. However, the present invention is not limited in the above-described embodiments. It is apparent to one who is skilled in the art that there are many variations and modifications, within the technical scope of the appended claims without departing off the spirit of the present invention.

## Claims

1. A radio multi-channel data communicating system comprising:
a file divider for dividing a file size of data to be transmitted into a number of available channels;
a plurality of first data converters for converting respective data in order to transmit the file divided by the file divider via a plurality of radio communication channels;
a plurality of data transmitters for transmitting data respectively converted by the plurality of the first data converters via a radio communication network;
a plurality of data receivers for receiving data transmitted from the plurality of the data transmitters via the radio communication network;
a plurality of second data converters for converting data respectively received by the plurality of the data receivers; and
a file synthesizer for synthesizing the divided files respectively converted by the plurality of the second data converters.

2. The radio multi-channel data communicating system of claim 1, wherein said data transmitter and said data receiver comprise a plurality of mobile phone terminals which transmit and receive data, respectively.

3. The radio multi-channel data communicating system of claim 1, further comprising a plurality of radio reserve channels to replace respective inferior communication channels when communication inferiorities occur in the plurality of radio communication channels.

4. The radio multi-channel data communicating system of claim 1, wherein said file divider and said file synthesizer are realized by software by using a general computer.

5. A radio multi-channel data communicating method for transmitting and receiving data using a radio multi-channel, the radio multi-channel data communicating method comprising the steps of:
(a) dividing a file size of data to be transmitted into a number of available channels;
(b) converting a number of the divided files of step (a) into a data format for transmitting the converted result via respective mobile phone terminals;
(c) receiving data transmitted from step (b) via the respective mobile phone terminals and converting the received data into an original data file format; and
(d) synthesizing the divided files respectively converted in step (c) into an original single file.

6. The radio multi-channel data communicating method of claim 5, wherein said divided file comprises a file structure portion representing an attribute of the file and a file data portion including data.

7. The radio multi-channel data communicating method of claim 5, wherein said file structure portion comprises a file name and a file size of an original file, and contents of a sequence of the divided file.

8. An image data transmitting system in which multimedia data requiring a real time reproduction is transmitted and reproduced, the image data transmitting system comprising:
a radio multi-channel data communicating system for dividing a data file desired to be transmitted into a number of files, transmitting the divided files via a plurality of radio communication channels, receiving the transmitted files and synthesizing the received files into an original file;
a vehicle state detector for detecting a running state of the moving vehicle and outputting the detected result;
a data processor for receiving a data file received via the radio multi-channel data communicating system and the result output from the vehicle state detector, and converting the received data file and detected result into an image signal and outputting the converted image signal; and
a plurality of displays for displaying data output from the data processor mounted on respective rooms of the moving vehicle.

9. The image data transmitting system of claim 8, further comprising a character generator for overlaying characters indicating a guiding message into a video signal output from the data processor and outputting the overlaid result.

10. The image data transmitting system of claim 8, wherein said character generator selectively performs any one of a function of overlaying a character message onto the video signal output from the data processor and outputting the overlaid result and a function of interrupting the video signal and outputting only a character message.

11. The image data transmitting system of claim 8, further comprising: a modulator for modulating the video signal output from the data processor into a RF video signal; and a video signal distributor for distributing the signal output from the modulator to a plurality of displays.

12. The image data transmitting system of claim 8, wherein said data processor further comprises a storage medium for storing the data received via the radio multi-channel data communicating system.

13. The image data transmitting system of claim 8, wherein said data processor outputs the data received and synthesized via the radio multi-channel data communicating system before storing the synthesized data in the storage medium, to thereby enhance a real-time processing capability.

14. The image data transmitting system of claim 12, wherein said data processor outputs the data received and synthesized via the radio multi-channel data communicating system before storing the synthesized data in the storage medium, to thereby enhance a real-time processing capability.
